# EUROPEAN PATENT APPLICATION

(11) **EP 4 299 185 A1**
(43) Date of publication of application: **03.01.2024**
(21) Application number: 22182136.6
(22) Date of filing: 30.06.2022
(51) Int. Cl.: B04B 1/00, B04B 13/00, B04B 11/02, G01G 17/04

(54) **A SEPARATION SYSTEM FOR SEPARATING A LIQUID MIXTURE**

(71) Applicant: Alfa Laval Corporate AB, 221 00 Lund (SE)
(72) Inventor: HOLM, Henrik, 148 96 SORUNDA (SE)
(74) Representative: Alfa Laval Attorneys

(57) **Abstract**

The present invention provides a separation system separation system (120) comprising a centrifugal separator (100) for separating a liquid feed mixture, wherein the centrifugal separator (100) is arranged for separating the liquid feed mixture into at least one separated liquid phase and discharging said at least one separated liquid phase. The separation system (120) further comprises a container (60) arranged for receiving a measurement liquid; said measurement liquid being either the liquid feed mixture or a separated liquid phase, and a device (61) for measuring a parameter related to the weight of measurement liquid contained in said container (60). The container (60) is suspended in said device (61) in a suspension direction (S), and the separation system (120) comprises a resilient member (70) arranged at a liquid inlet (60a) and/or liquid outlet (60b) of said container (60), wherein the resilient member (70) is resilient at least in said suspension direction (S).

## Description

### Technical field

The present inventive concept relates to the field of centrifugal separators.

More particularly, it relates to a separation system and method for measuring a liquid flow to and/or from a centrifugal separator.

### Background

Centrifugal separators are generally used for separation of liquids and/or solids from a liquid mixture or a gas mixture. During operation, fluid mixture that is about to be separated is introduced into a rotating bowl and due to the centrifugal forces, heavy particles or denser liquid, such as water, accumulates at the periphery of the rotating bowl whereas less dense liquid accumulates closer to the central axis of rotation. This allows for collection of the separated fractions, e.g. by means of different outlets arranged at the periphery and close to the rotational axis, respectively.

The traditional way of measuring a liquid flow of the separated liquid phase from a centrifugal separator is using a flow sensor. Flow sensors are expensive in general and it may be difficult to select an appropriate flow sensor for a specific application since flow sensors may depend on several different measuring principles, all with their own advantages and disadvantages. Measurement errors normally occur if one wants to measure different liquids with the same flow sensor or if the temperature or liquid composition varies over time.

WO 2021/191023 discloses a system and method of determining the flow rate, such as mass flow, of a liquid phase discharged from a centrifugal separator. For this, a container arranged downstream of any of the liquid outlets is used. Further, there is a scale for measuring the weight of the discharged liquid phase contained in the container. With such knowledge, the mass increase per time may be calculated and thus the flow rate of the discharged liquid phase.

However, there may be a need to further improve the accuracy of the measured flow rate in such a system.

### Summary

It is an object of the invention to at least partly overcome one or more limitations of the prior art. In particular, it is an object to provide a separator and a method for determining the flow rate of a measurement liquid with improved accuracy.

As a first aspect of the invention, there is provided a separation system comprising a centrifugal separator for separating a liquid feed mixture. The centrifugal separator is arranged for separating the liquid feed mixture into at least one separated liquid phase and discharging said at least one separated liquid phase.

The separation system further comprises a container arranged for receiving a measurement liquid; said measurement liquid being either the liquid feed mixture or a separated liquid phase, and a device for measuring a parameter related to the weight of measurement liquid contained in the container. The container is suspended in the device in a suspension direction, and the separation system comprises a resilient member arranged at a liquid inlet and/or liquid outlet of the container, wherein the resilient member is resilient at least in the suspension direction.

The centrifugal separator may be as disclosed in WO 2021/191023. Thus, the centrifugal separator may have a rotatable assembly that is arranged for multiple use, such as a traditional stainless steel centrifuge bowl, or a rotatable assembly that is arranged for single use, such as a replaceable insert as known from e.g. WO 2020/120357. Thus, in embodiments of the first aspect, the rotatable assembly may comprise an exchangeable separation insert and a rotatable member; the insert comprising the rotor casing and being supported by the rotatable member. Such an exchangeable separation insert may thus be a pre-assembled insert being mounted into a rotatable support for the insert. The exchangeable insert may thus easily be inserted into and taken out of the rotatable support as a single unit.

According to embodiments, such exchangeable separation insert is a single use separation insert. Thus, the insert may be adapted for single use and be a disposable insert. The exchangeable insert may thus be for processing of one product batch, such as a single product batch in the pharmaceutical industry, and then be disposed. The exchangeable separation insert may comprise a polymeric material or consist of a polymeric material.

The centrifugal separator may be arranged for separating the liquid feed mixture into two liquid phases, such as a liquid light phase and a liquid heavy phase, in which the liquid heavy phase has a density that is higher than the liquid light phase. Consequently, the centrifugal separator may comprise a single outlet for a discharged liquid phase or two outlets for discharged liquid phases.

The container and the device for measuring a parameter related to the weight of measurement liquid contained in the container may be arranged upstream of an inlet of the centrifugal separator and thus be used for measuring the flow rate of the liquid feed mixture. Consequently, in embodiments, the measurement liquid is the liquid feed mixture.

The container and the device for measuring a parameter related to the weight of measurement liquid contained in the container may as a complement or alternative be arranged downstream a liquid outlet of the centrifugal separator, such as downstream of a liquid outlet for discharging a separated liquid light phase and/or downstream a liquid outlet for discharging a separated liquid heavy phase.

The container and the device for measuring a parameter related to the weight of measurement liquid contained in the container may thus be used for measuring the flow rate of a separated liquid phase from the centrifugal separator.

Consequently, in embodiments, the measurement liquid is a separated liquid phase, such as a separated liquid light phase or a separated liquid heavy phase.

The first aspect of the invention is based on the insight that when filling or emptying the container in a measurement system as disclosed in WO 2021/191023, the tubing may have a big influence on the device for measuring the parameter related to the weight of the measurement liquid. For example, a pulsating flow may give rise to strains in the tubing which may affect the measurement accuracy. This is for example the case if the device is a load cell. The inventor has found that if a resilient member that is resilient in the same direction as the suspension direction, the device for measuring the parameter related to the weight in the container is less sensitive to strains arising from a pulsating flow. This increases the measurement accuracy and also gives flexibility and repeatability to the system.

Further, the use of a resilient member allows for a space efficient solution for increasing the accuracy of the measurements, which is an advantages e.g. in a single use system, in which the centrifugal separator together with container and bag may be fitted onto the same structure.

In embodiments of the first aspect, the suspension direction is the vertical direction. Thus, the container may be suspended in the device for measuring a parameter related to the weight of measurement liquid in the vertical direction. The device may thus be a suspension scale.

Further, in embodiments of the first aspect, the system comprises tubing for transporting the measurement liquid to the container.

The tubing used for transporting the measurement liquid may be a polymeric tubing, such as a silicone tubing. Such tubing may have a large wall thickness.

In embodiments of the first aspect, the system comprises tubing for transporting the measurement liquid from the container.

In embodiments of the first aspect, the container is a bag, such as a flexible bag.

The container may be arranged for being cyclically filled and emptied, and during filling up of the container and when no liquid is leaving the container, the weight increase over time may be evaluated and the liquid flow rate, e.g. the volume flow or the mass flow, may be determined.

The mass flow may be calculated by determining a weight increase (Δw) of the container during a time interval (Δt), and then estimate Δw/Δt. The volume flow may be determined from the mass flow using the density of the liquid phase entering the container.

In embodiments of the first aspect, the container comprises a liquid inlet for receiving the measurement liquid and a liquid outlet for emptying the liquid phase from the container; and wherein the separation system further comprises valve means for regulating the flow of liquid phase being emptied from the container.

The valve means may be arranged downstream of the container. The valve means may for example be a regulating valve, a shutoff valve, or a peristaltic pump.

In embodiments of the first aspect, the resilient member is arranged at a liquid inlet of the container. The resilient member may thus be arranged upstream of the container. The liquid inlet of the container may thus be the liquid inlet of the liquid phase discharged from the centrifugal separator.

The container may comprise a liquid inlet and a liquid outlet. These may be separate connections, such as separate connections arranged at separate positions on the container. The liquid outlet may be a tubing arranged within the liquid inlet, or vice versa.

However, in embodiments of the first aspect, the liquid inlet is also the liquid outlet of the container.

Consequently, the container may be filled and emptied using the same connection for liquid, wherein the connection functions as both the liquid inlet and outlet. For this purpose, the system may comprise a valve, such as a three-way valve, upstream of the container for directing a measurement liquid to and from the container.

In embodiments of the first aspect, the resilient member is arranged at a liquid outlet of the container. Thus, the resilient member may be arranged downstream of the liquid outlet. The liquid outlet of the container may thus be the outlet for the discharged liquid phase from the separation system.

The resilient member may be a member outside of the container.

In embodiments of the first aspect, the resilient member is arranged axially below the container.

In embodiments of the first aspect, the liquid inlet and/or liquid outlet of the container are arranged in a lower part of the container. Thus, the inlet and/or outlet at which the resilient member is arranged may be in a lower part of the container.

The resilient member may be formed by arranging the tubing used for transporting the measurement liquid to and/or from the container in a resilient shape. Thus, the resilient member may a formation of the tubing itself. The resilient member may thus be formed such that also the length of the tubing is increased in the resilient member.

Consequently, in embodiments of the first aspect, the resilient member is formed by a resilient spatial arrangement of the tubing used for transporting the measurement liquid to or from the container.

As an example, the resilient spatial arrangement may be a helix shaped arrangement.

The axis of such helix shape arrangement may thus substantially in the suspension direction of the container. The helix-shaped arrangement may thus form a helical coil, i.e. a "pig-tail" arrangement. The resilient spatial arrangement may have any other three-dimensional-shape such that the resilient member is resilient in the suspension direction. Such shape may be e.g. an S-shape or a three-dimensional serpentine shape.

In embodiments of the first aspect, the resilient member is a member separate from the tubing used for transporting the measurement liquid to or from the container.

As an example, the resilient member may be a flexible container in which the tubing used for transporting the measurement liquid to or from the container is arranged.

As a further example, the resilient member may be a part of the container.

Thus, the container itself may be formed with a resilient portion or resilient member that is resilient at least in the suspension direction.

In embodiments of the first aspect, the device for measuring a parameter related to the weight is a scale.

The scale may be a suspension scale, i.e. the container may hang suspended from the scale instead of resting upon it.

The scale may comprise a load cell. Such load cell may thus be a force transducer converting the force such as tension, compression, pressure, or torque into an electrical signal that can be measured. The load cell may thus be a strain gauge load cell. Such load cell may comprise a body that is slightly deformed when applying a load. This, in turn, may causes a change in the electrical resistance of the strain gauge which can be measured as a voltage change that is proportional to the amount of weight applied.

However, the device for measuring a parameter related to the weight of measurement liquid may also be a device for measuring a parameter that is proportional to the weight of the measurement liquid, such as a device for measuring a volume of the measurement liquid in the container.

The other parts of the separation system may be as disclosed in WO 2021/191023.

The centrifugal separator may comprise a stationary frame, a rotatable assembly and a drive unit for rotating the rotatable assembly relative the frame around an axis of rotation (X). The centrifugal separator may further comprise a feed inlet for receiving a liquid feed mixture to be separated, at least one liquid outlet for discharge of a separated liquid phase, wherein the rotatable assembly comprises a rotor casing enclosing a separation space in which the separation of said liquid feed mixture takes place during operation, and wherein the separation space is arranged for receiving liquid feed mixture from said feed inlet.

The stationary frame of the centrifugal separator is a non-rotating part, and the rotatable assembly is supported within the frame, e.g. by means of at least one bearing, for example a ball bearing.

The centrifugal separator may further comprise a drive unit arranged for rotating the rotatable assembly and may comprise an electrical motor or be arranged to rotate the rotatable assembly by a suitable transmission, such as a belt or a gear transmission. Thus, the drive unit may be arranged to drive the rotatable assembly directly or indirectly via a transmission.

The rotatable assembly comprises a rotor casing in which the separation takes place. The rotor casing may thus be a centrifuge bowl. The rotor casing encloses a separation space in which the separation of the fluid mixture, such as a cell culture mixture, takes place. The rotor casing may be a solid rotor casing and be free of any further outlets for separated phases. Thus, the solid rotor casing may be solid in that it is free of any peripheral ports for discharging e.g. a sludge phase accumulated at the periphery of the separation space. However, in embodiments, the rotor casing comprises peripheral ports for intermittent or continuous discharge of a separated phase from the periphery of the separation space.

The rotor casing may be arranged for multiple use or be an exchangeable insert arranged for single use.

The feed inlet is for receiving the liquid feed mixture to be separated and for guiding the feed to the separation space.

The separation space may comprise a stack of separation discs arranged centrally around the axis of rotation. The stack may comprise frustoconical separation discs.

The separation discs may thus have a frustoconical shape, which refers to a shape having the shape of a frustum of a cone, which is the shape of a cone with the narrow end, or tip, removed. A frustoconical shape has thus an imaginary apex where the tip or apex of the corresponding conical shape is located. The axis of the frustoconical shape is axially aligned with the axis of rotation of the solid rotor casing. The axis of the frustoconical portion is the direction of the height of the corresponding conical shape or the direction of the axis passing through the apex of the corresponding conical shape.

The separation discs may alternatively be axial discs arranged around the axis of rotation.

The separation discs may e.g. comprise a metal or be of metal material, such as stainless steel. The separation discs may further comprise a plastic material or be of a plastic material.

The centrifugal separator may be arranged to separate the liquid feed mixture into at least one liquid phase, such as into at least a first and second liquid phase. Separated liquid phases may be discharged via first and second liquid outlets. The first liquid outlet, also denoted liquid light outlet, is for discharging a separated liquid phase of a lower density, whereas the second liquid outlet, also called the liquid heavy outlet, is for separating a phase of a higher density than the liquid phase that is discharged via the first liquid outlet.

The container may be arranged either downstream of the first liquid outlet or downstream of the second liquid outlet. In embodiments, there is a container and scale arranged downstream of both liquid outlets.

The container may be arranged for being filled up and emptied, e.g. in a cyclic manner. Thus, in embodiments of the first aspect, the container is not a storage container for long term storage of any separated liquid phase.

Consequently, in embodiments of the first aspect, the separation system comprises a tank for receiving liquid phase being emptied from the container.

The tank may be arranged for long term storage of a separated liquid phase. The tank may thus have a volume that is larger than the volume of the container. The tank may have a volume that is at least five, such as at least ten, such as at least 25 times the volume of the container. The tank may e.g. be of stainless steel.

In embodiments, the container is arranged for holding a volume of at least 100 ml, such as at least 500 ml. Moreover, the container may have a maximum volume of less than 5000 ml, such as less than 2500 ml, such as less than 1500 ml, such as 1000 ml or less.

In embodiments of the first aspect of the invention, the separation system further comprises a control unit configured for determining the weight increase of the container as a function of time.

The control unit may further be configured to determine or calculate the flow of the liquid phase being discharged to the container based on the measured weight increase as a function of time.

The control unit may comprise computer program products configured for determining the weight increase as a function of time. The control unit may thus comprise a processor and communication interface for communicating with the scale.

For this purpose, the control unit may comprise a device having processing capability in the form of processing unit, such as a central processing unit, which is configured to execute computer code instructions which for instance may be stored on a memory. The processing unit may alternatively be in the form of a hardware component.

As an example, the control unit may further be configured for determining a flow rate of measurement liquid based on the measured weight increase of the container as a function of time.

The flow rate may be a mass flow or a volume flow. Moreover, if the separation system comprises valve means for regulating the flow of liquid phase being emptied from the container, the control unit may further be configured to control the valve means. Further, the control unit may also be configured to close the valve means during the determining of the weight increase of the container as a function of time. Controlling the valve means may thus comprise opening and closing the valve means and/or regulating the flow through the valve means.

Thus, the weight increase of the container may be measured when there is no emptying of the container, i.e. when there is just a fill-up of the container. A longer fill-up will result in a larger measurement volume of the container and thus a reduced measurement error.

Furthermore, the control unit may be further configured to open the valve means such that an outlet flow of liquid phase from the container is higher than an inlet flow of liquid phase to the container. This may thus lead to emptying of the container.

Measuring the weight increase of the container, and from that e.g. the flow into the container, may be performed in a cyclic manner. Thus, the control unit may be configured to switch between closing the valve means and opening the valve means such that the container is filled and emptied in cycles.

The control unit may therefore be configured to measure the weight increase of the container during the periods when the valve means is closed, i.e. during several fill-up periods of the container.

In embodiments of the first aspect of the invention, the container is arranged downstream a first liquid outlet. Consequently, the control unit may be used for measuring the flow of a measurement liquid using information of the weight increase as a function of time of the container.

The use of the container suspended in a device for measuring a parameter related to the weight of measurement liquid and measuring the weight increase of the container as a function of time allows for omitting the use of further flow sensors since the liquid flow may be determined from the measured weight increase. Consequently, in embodiments of the first aspect, the separation system may be free of any flow sensor arranged downstream of a liquid outlet at which, or downstream which, a container is arranged. That is, the centrifugal separator may be free of any additional flow sensor other than the container and scale arranged downstream of the relevant liquid outlet.

As a second aspect of the invention, there is provided a method for measuring the flow rate of a measurement liquid in a separation system comprising a centrifugal separator, said measurement liquid being either a liquid feed mixture to be separated or a separated liquid phase, said method comprising the steps of
a) providing a separation system according to the first aspect above;
b) supplying liquid feed mixture to a feed inlet of the centrifugal separator and discharging at least one separated liquid phase from a liquid outlet of the centrifugal separator;
c) measuring a weight increase as a function of time of a measurement liquid in said container of the separation system, and
d) determining a flow rate of said measurement liquid based on the measured weight increase of step c).

This aspect may generally present the same or corresponding advantages as the former aspect. Effects and features of this second aspect are largely analogous to those described above in connection with the first aspect. Embodiments mentioned in relation to the first aspect are largely compatible with the second aspect.

Step b) of supplying feed may for example be performed by the use of a feed pump, as known in the art.

Steps c) and d) may be performed by a control unit as discussed in relation to the first aspect above.

In embodiments of the second aspect, step c) may further comprise step c1) of stopping a flow of separated liquid phase out from the container during the measuring of the weight increase of the container as a function of time.

As discussed in relation to the first aspect above, the weight measurements may thus be performed during fill-up of the container.

Moreover, step c) may comprise a step c2) of starting the flow of separated liquid phase out from the container, thereby emptying the container after the measuring of the weight increase of the container as a function of time.

The flow of separated phase out from the container may be performed during inflow of the container, e.g. with a higher flow rate of separated liquid phase out from the container than the flow rate of separated liquid phase into the container. In this way, the container may be emptied even though there is a flow into the container.

Filling up and emptying the container may be performed several times, e.g. in a cyclic manner. Thus, step c) may comprise repeating steps c1) and c2).

The container and scale may be used together with another flow sensor. In this way, such other flow sensor may be adjusted, such as calibrated, using the measured weight increase as function of time of the container.

Consequently, in embodiments of the second aspect, the method is further comprising adjusting a flow sensor arranged downstream of the same liquid outlet at which the container is arranged based on the determined flow rate of the liquid phase in step d). The adjusting of a flow sensor may be a calibration of the flow sensor.

### Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1 is a schematic view of a separation system of the present disclosure in which a container and scale is arranged downstream the first liquid outlet.
Fig. 2 is a schematic view of the separation system of Fig. 1 further comprising a control unit.
Fig. 3 is a schematic view of the separation system in which a peristaltic pump is used for regulating the flow to and from the container.
Fig. 4 is a schematic view of a separation system in which the measurements of the weight increase are used to calibrate a flow sensor.
Fig. 5 is a schematic view of a separation system of the present disclosure in which a container and scale is arranged downstream the second liquid outlet.
Fig. 6 is a schematic illustration of a separation system for separating a cell culture mixture.
Fig. 7 is a schematic illustration of a container according to an embodiment of the present disclosure that may be used in the separation system.
Fig. 8 is a schematic illustration of a container according to an embodiment of the present disclosure that may be used in the separation system.
Fig. 9 is a schematic illustration of a container according to an embodiment of the present disclosure that may be used in the separation system.
Fig. 10 is a close-up view of a helix shaped resilient member.

### Detailed description

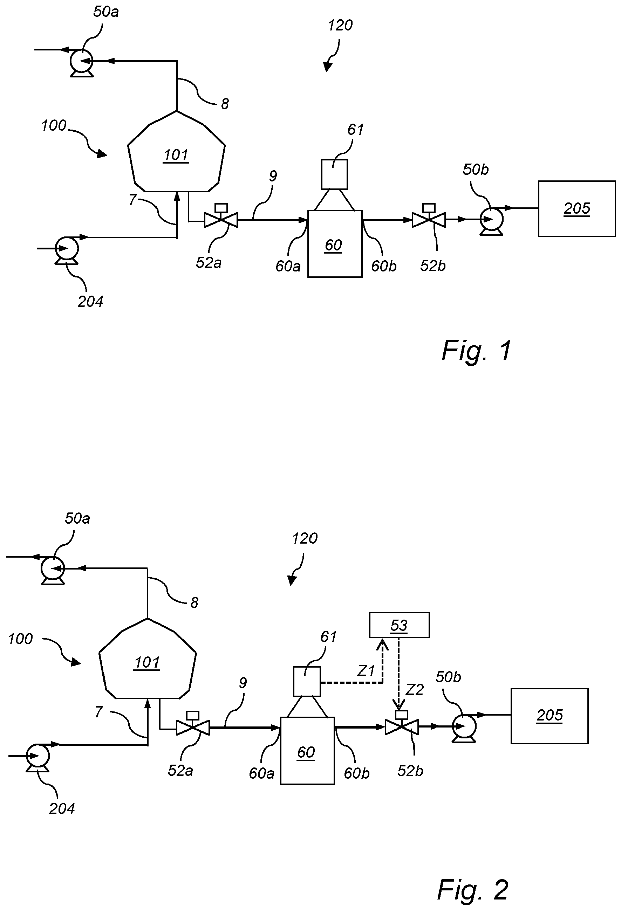

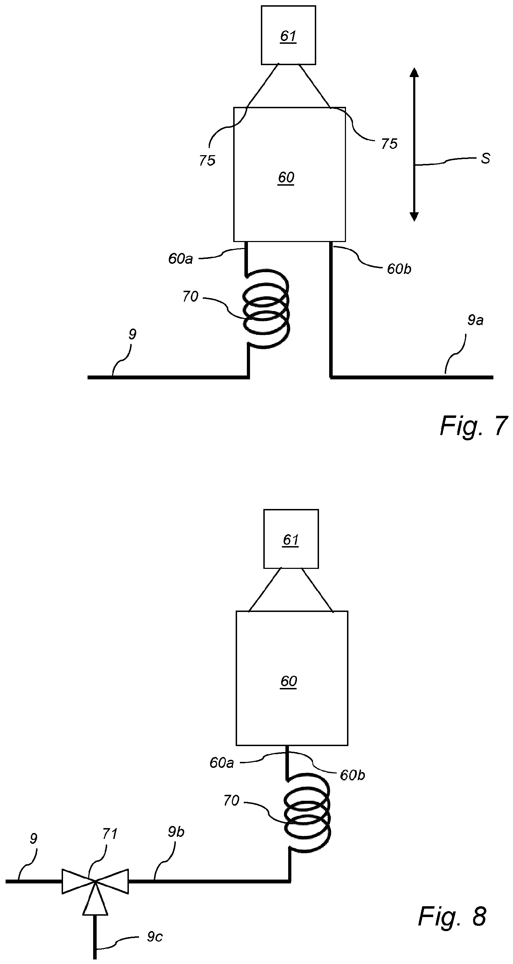

Figs. 1-6 generally describes the separation system as a whole, whereas Figs. 7-9 show details of the container and measuring device used for measuring the weight of the liquid phase of the container. In Figs. 1-6, the container and the device for measuring a parameter related to the weight of measurement liquid contained in the container are arranged downstream one of the liquid outlets of the centrifugal separator. However, it is to be understood that the container and the device for measuring a parameter related to the weight of measurement liquid contained in the container may as an alternative or complement be arranged upstream of an inlet of the centrifugal separator and thus be used for measuring the flow rate of the liquid feed mixture.

Fig. 1 schematically shows a separation system 120 according to embodiments including a schematic view of a centrifugal separator 100 of the present disclosure. For clarity reasons, only the outside of a rotatable assembly 101 of the centrifugal separator 100 is shown.

As discussed above, the centrifugal separator may be as disclosed in WO 2021/191023. Thus, the centrifugal separator may have a rotatable assembly that is arranged for multiple use, such as a traditional stainless steel centrifuge bowl, or a rotatable assembly that is arranged for single use, such as a replaceable insert as known from e.g. WO 2020/120357.

In the centrifugal separator 100 of Fig. 1, liquid feed mixture to be separated is supplied to the rotatable assembly 101 via stationary inlet pipe 7 by means of a feed pump 204. In this example, the liquid feed mixture is separated into a liquid light phase and a liquid heavy phase.

After separation within a separation space of the rotatable assembly, separated liquid light phase is discharged through a first liquid outlet to a first stationary outlet pipe 9, whereas separated heavy phase is discharged via a second liquid outlet to a second stationary outlet pipe 8.

The first 9 and second 8 stationary outlet pipes may be flexible tubing.

Downstream of the second liquid outlet, there is a peristaltic pump 50a arranged for facilitating discharge of the second liquid phase. The peristaltic pump 50a also functions as a regulating valve and may thus be used for regulating the flow, or shutting off the flow, of separated heavy phase being discharged in stationary pipe 8.

Downstream of the first liquid outlet, there is a regulating valve 52a for regulating the discharge of separated liquid light phase in stationary outlet pipe 9. Downstream of this regulating valve, there is a container 60 arranged for receiving the discharged liquid light phase. The container has a container inlet 60a for receiving the discharged separated liquid light phase and a container outlet 60b for emptying the liquid phase from the container 60. The emptying of the container 60 is performed via a shutoff valve 52b arranged downstream of the container 60. A positive displacement pump 50b, such as a peristaltic pump 50b, arranged downstream of the container 60, is used for facilitating the flow from the first liquid outlet and to tank 205.

The container may be a flexible bag.

The container 60 is in this embodiment suspended in a scale 61, which is thus configured for measuring the weight of the container 60. The measured weight of separated liquid light phase in the container is thus a measure of the amount of liquid light phase being discharged, and such measurements of the weight of the scale may be used for calculating the discharged flow rate of the separated liquid light phase.

As also illustrated in Fig. 1, liquid light phase that has been emptied from the container 60 is collected in a tank 205, e.g. in a cyclic manner. This tank 205 has a larger volume than the container 60 and is used for storage of separated liquid light phase, whereas the container 60 suspended in the scale 61 is arranged for being emptied during separation of the liquid feed mixture in the separator 100. The tank 205 may be used for intermediate storage, or long-term storage, before further processing of the discharged liquid light phase. The tank 205 may have a volume that is at least five times, such as at least ten times, larger than the volume of the container 60.

Fig. 2 illustrates an embodiment of a separation system 120. The system 120 has a similar set up as the separation system 120 illustrated in Fig. 1, with the addition of a control unit 53 configured for determining the weight increase the container 60 as a function of time. Thus, the control unit 53 is configured for receiving measurement data of the weight of the container 60, e.g. continuously or at discrete points in time. This is illustrated by arrow "Z1" in Fig. 2. Moreover, the control unit 53 is further configured for determining the flow of discharged separated liquid phase based on the measured weight increase of the container 60 as a function of time. The control unit 53 is in this embodiment also connected to the shutoff valve 52b, as illustrated by arrow "Z2". The control unit 53 comprises a communication interface, such as a transmitter/receiver, via which it may receive weight data from the scale 61. The control unit 53 is thus configured for receiving information of the weight as a function of time of the container 60.

The control unit 53 may further be configured to determine the flow rate of liquid light phase being discharged using the measured weight of the container 60 as a function of time. For this purpose, the control unit 53 may comprise a device having processing capability in the form of processing unit, such as a central processing unit, which is configured to execute computer code instructions which for instance may be stored on a memory. The processing unit may alternatively be in the form of a hardware component, such as an application specific integrated circuit, a field-programmable gate array or the like.

The control unit 53 is in this example also configured for regulating the liquid flow through the shutoff valve 52b. For this purpose, the processing unit of the control unit 53 may further comprise computer code instructions for sending operational requests to the shutoff valve 52b

As an example, the control unit may be configured to close the shutoff valve 52b during the measuring of the weight increase of the container 60 as a function of time. Moreover, the control unit 53 may further be configured to open the shutoff valve 52b such that the outlet flow of liquid light phase from the container 60 is higher than the inlet flow of liquid light phase to the container 60. In this way, the control unit 53 and the shutoff valve 52b are used for emptying the container 60 with the pump 50b.

As a further example, the control unit 53 may be configured to switch between closing the shutoff valve 52b and opening the shutoff valve 52b such that the container 60 is filled and emptied in cycles. This means that the measurement of the weight increase as a function of time may be performed on regular basis, i.e. the flow rate of liquid light phase may be determined almost continuously during processing of the liquid feed mixture in the centrifugal separator 100.

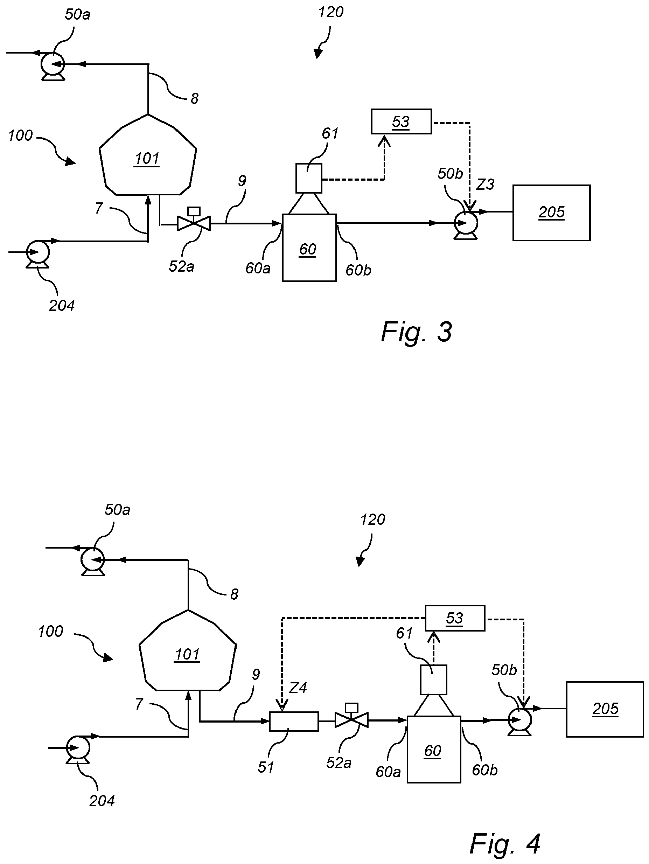

Fig. 3 illustrates an embodiment of a separation system 120 of the present disclosure. This separation system 120 has a similar set-up as the system 120 discussed in relation to Fig. 2, with the difference that the positive displacement pump 50b in the form of a peristaltic pump 50b is used for regulating the outflow of liquid light phase from the container 60. Consequently, in this embodiment, the control unit 53 is connected to the peristatic pump 50b, as illustrated by arrow "Z3" in Fig. 3. The control unit 53 is hence configured for regulating the liquid flow through the peristaltic pump 50b, such as the flow rate through peristaltic pump 50b. For this purpose, the processing unit may further comprise computer code instructions for sending operational requests to the peristaltic pump 50b.

As illustrated in Figs. 1-3, with the use of the container 60 and scale 61 arranged downstream of the first liquid outlet, the separation system 120 may be free of any additional flow sensor arranged downstream of the first liquid outlet.

However, as an alternative, the measurements of the weight increase as a function of time may be used for adjusting, such as calibrating, a flow sensor 51. Such an embodiment is illustrated in Fig. 4, in which the separation system 120 further comprises a flow sensor 51 arranged downstream of the first liquid outlet, i.e. downstream of the same liquid outlet as the container 60 and scale 61 is arranged.

The control unit 53 is in this embodiment further connected to the flow sensor 51, such that it may calibrate the flow sensor 51 based on the measured weight increase of the container 60 as a function of time. This is illustrated by arrow "Z4" in Fig. 4. Thus, the control unit 53 may comprise a communication interface, such as a transmitter/receiver, via which it may receive and send data to the flow sensor 51 for calibration based on the measured flow rate obtained from the measurements of the weight increase as a function of time of the container 60. Thus, the control unit 53 may be configured to compare a received flow rate from flow sensor 51 with a flow rate calculated by the measurements of the weight increase as a function of time of the container 60, and based on this comparison, the flow sensor 51 may be calibrated.

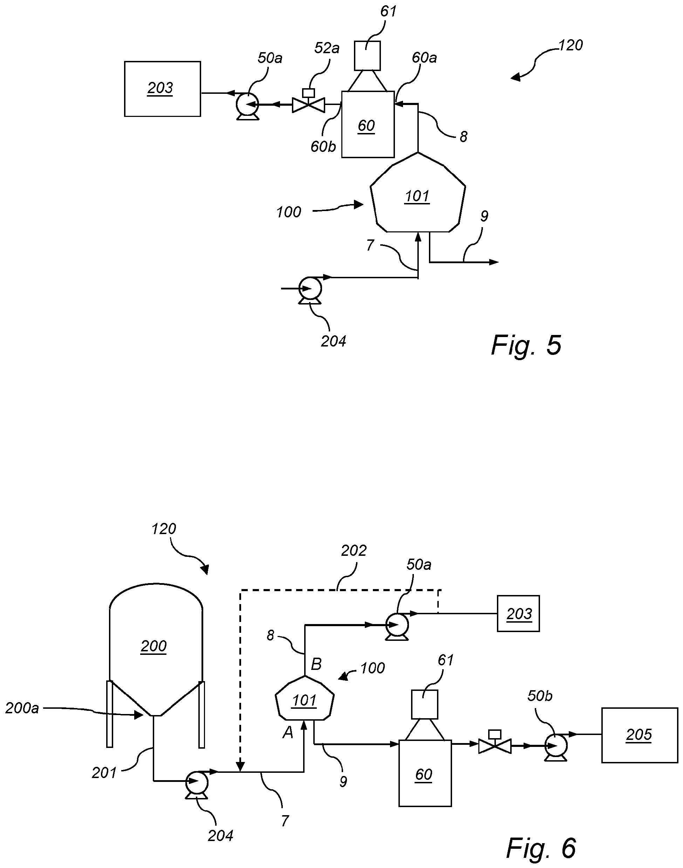

It is to be understood that a container 60 as well as a scale 61 for measuring the weight of discharged liquid phase contained in the container 60 may be arranged downstream of the second liquid outlet as well and may thus be used for measuring the flow rate of the discharged liquid heavy phase. This is illustrated in Fig. 5. Thus, the separation system 120 may comprise a container 60 and a scale 61 for measuring the weight of discharged liquid phase contained in the container 60 downstream either one of the liquid outlets or downstream both of the liquid outlets.

Fig. 6 is a schematic illustration of a separation system 120 for separating a cell culture mixture. The system 120 comprises a fermenter tank 200 configured for comprising a cell culture mixture. The fermenter tank 200 has an axially upper portion and an axially lower portion 200a. Fermentation in the fermentation tank 200 may for example be for expression of an extracellular biomolecule, such as an antibody, from a mammalian cell culture mixture. After fermentation, the cell culture mixture is separated in a centrifugal separator 100 according to the present disclosure. As seen in Fig. 6, the bottom of the fermenter tank 200 is connected via a connection 201 to the bottom of the separator 100 to the inlet conduit 7 of the separator. The connection 201 may be a direct connection or a connection via any other processing equipment, such as a tank. Thus, the connection 201 allows for supply of the cell culture mixture from the axially lower portion 200a of the fermenter tank 200 to the inlet at the axially lower end of the centrifugal separator 100, as indicated by arrow "A". There is a feed pump 204 arranged for pumping the feed, i.e. the cell culture mixture from fermentation tank 200, to the inlet of the separator 100.

After separation, the separated cell phase of higher density is discharged via the second liquid outlet at the top of the separator to stationary outlet conduit 8, whereas the separated liquid light phase of lower density, comprising the expressed biomolecule, is discharged via the liquid light phase outlet at the bottom of the separator 100 to stationary outlet conduit 9.

The flow rate of the separated liquid light phase discharged via stationary outlet conduit 9 is determined by container 60 and scale 61, as discussed in relation to Figs. 1-4 above, e.g. with the use of a control unit (not shown in Fig. 6) as discussed in relation to Figs. 1-4 above.

The positive displacement pumps 50a, 50b may provide suction forces to the discharged liquid phases thus allowing for a lower feed pressure to be used with feed pump 204, which thus facilitates a gentler treatment of the cells in the separator 100. As an alternative, the feed pump 204 may be completely omitted, and the cells may be drawn to the separator 100 solely by the use of the suction force generated by the positive displacement pumps 50a, 50b.

The separated cell phase may be discharged to a tank 203 for re-use in a subsequent fermentation process, e.g. in the fermenter tank 200. The separated cell phase may further be recirculated to the feed inlet of the separator 100, as indicated by connection 202. The separated liquid light phase may be discharged via outlet conduit 9 to further tank 205 or other process equipment for subsequent purification of the expressed biomolecule.

Fig. 7 shows some further details of the container 60, the device 61 for measuring the weight of discharged liquid phase contained in the container 60 as well as the resilient member 70 shown in any of Figs. 1-6. The container 60 is in the form of a flexible bag that is suspended in the device 61 for measuring the weight. The device 60 may thus be a suspension scale comprising a load cell. The container is suspended in a suspension direction S, which is in this case the vertical direction. This suspension direction S may thus be the same as the rotational axis X of the centrifugal separator 101 of the system 120 as shown in Figs. 1-6.

The container 60 is in this case suspended in two suspension points 75. However, any number of suspension points 75 may be used, such as a single suspension point 75.

The container 60 further comprises a container inlet 60a for receiving the measurement liquid from upstream tubing 9 when the container 60 is being filled, and a container outlet 60b for discharging the liquid phase when the container 60 is being emptied into downstream tubing 9a. In this example, the liquid inlet 60a and the liquid outlet 60b are both arranged in a lower part, such as in the bottom part, of the container 60.

The separation system 120 further comprises a resilient member 70 arranged at the liquid inlet 60a of the container 60. The resilient member 70 is resilient in the suspension direction S i.e. it has its largest resilience in direction S. The resilient member 70 is arranged axially below the container 60, i.e. just axially below the liquid inlet 60a.

The resilient member 70 is formed by the tubing 9 used for transporting the liquid phase to the container 60. The tubing 9 forms the resilient member 70 by forming a resilient spatial arrangement in the form of a helix-shaped arrangement that has its axis aligned with the suspension direction S. In this way, the risk of any pulsed flow or unwanted strains affecting the suspension scale is decreased.

Fig. 8 shows an example of a container 60. The container 60, the resilient member 70 and the measurement device 61 is the same as discussed in relation to Fig. 7 above, but in this case the same tubing is used as a liquid inlet 60a and 60b. Thus, the same tubing is in this example used for both filling and emptying the container or bag 60, i.e. liquid inlet 60a is also the liquid outlet 60b of the container 60. Filling and emptying using the same inlet/outlet via the inlet/outlet tubing 9b may be performed by using the three-way valve 71 upstream of the container 60, such that liquid being emptied from the container 60 may be directed further downstream of the separation system in tubing 9c. The control unit 53 discussed in relation to e.g. Figs. 2-4 may be used for controlling the three-way valve 71, i.e. used for controlling the filling and emptying of the container with the same tubing.

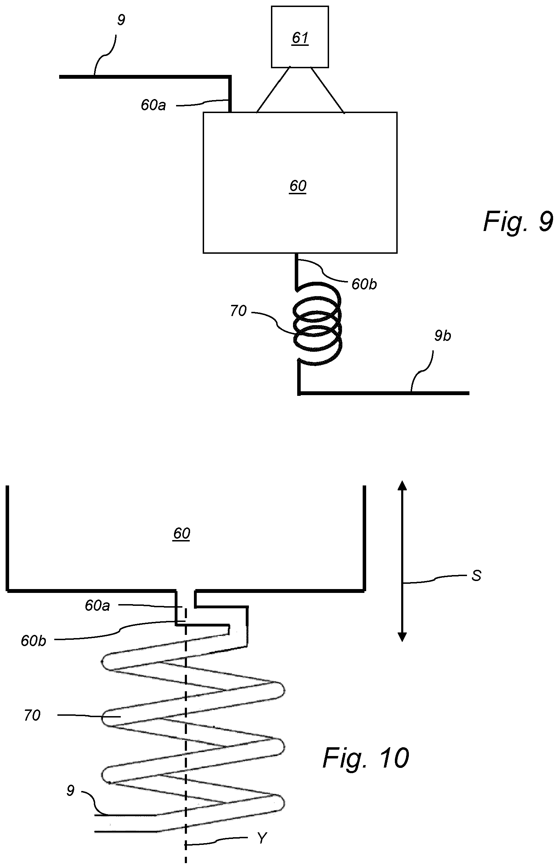

The resilient member 70 may also be arranged at a liquid outlet 60b of the container 60. Such an embodiment is illustrated in Fig. 9, in which the liquid inlet 60a from which the liquid phase from the centrifugal separator is supplied, is arranged in an upper portion of the container 60, whereas the liquid outlet 60b is arranged in a lower portion of the container. The resilient member 70 is arranged downstream of the liquid outlet 60b in order to decrease the risk of any strain in downstream tubing 9b, i.e. the tubing into which the container 60 is emptied, affecting the measurement of the weight in the container 60.

Fig. 10 shows a close-up view of a resilient member 70 that may be used. The resilient member 70 is a helix-shaped arrangement formed by the tubing 9 used for transporting the liquid phase to and from the container 60. The helix-shaped arrangement has an axis Y around which the helix-shaped arrangement extends. The resilient member 70 is arranged such that the axis Y is substantially parallel to the suspension direction S of the container 60.

In the above examples, the resilient member 70 has been formed by an arrangement of the tubing itself. However, the resilient member 70 may also be a member separate from the tubing 9 used for transporting the liquid to or from the container 60. As an example, the resilient member 70 may be a flexible container in which the tubing 9 used for transporting the liquid to or from the container 60 is arranged.

In the above, the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A separation system (120) comprising a centrifugal separator (100) for separating a liquid feed mixture, wherein the centrifugal separator (100) is arranged for separating the liquid feed mixture into at least one separated liquid phase and discharging said at least one separated liquid phase,
and further wherein the separation system (120) comprises
a container (60) arranged for receiving a measurement liquid; said measurement liquid being either the liquid feed mixture or a separated liquid phase, and
a device (61) for measuring a parameter related to the weight of measurement liquid contained in said container (60),
wherein said container (60) is suspended in said device (61) in a suspension direction (S), and
wherein the separation system (120) comprises a resilient member (70) arranged at a liquid inlet (60a) and/or liquid outlet (60b) of said container (60), wherein the resilient member (70) is resilient at least in said suspension direction (S).

2. A separation system (120) according to claim 1, wherein the resilient member (70) is arranged at a liquid inlet (60a) of said container (60).

3. A separation system (120) according to claim 2, wherein the liquid inlet (60a) is also the liquid outlet (60b) of the container (60).

4. A separation system (120) according to claim 1, wherein the resilient member (70) is arranged at a liquid outlet (60b) of said container (60).

5. A separation system (120) according to any previous claim, wherein said resilient member (70) is arranged axially below said container (60).

6. A separation system (120) according to any previous claim, wherein said liquid inlet (60a) and/or liquid outlet (60b) of said container (60) are arranged in a lower part of said container (60).

7. A separation system (120) according to any previous claim, wherein the resilient member (70) is formed by a resilient spatial arrangement of the tubing (9) used for transporting the measurement liquid to or from said container (60).

8. A separation system (120) according to claim 7, wherein the resilient spatial arrangement is a helix-shaped arrangement.

9. A separation system (120) according to claim 8, wherein the axis (Y) of the helix-shaped arrangement is substantially in the suspension direction (S) of the container (60).

10. A separation system (120) according to any one of claims 1-6, wherein the resilient member (70) is a member separate from the tubing (9) used for transporting the measurement liquid to or from said container (60).

11. A separation system (120) according to claim 10, wherein the resilient member (70) is a flexible container in which the tubing (9) used for transporting the measurement liquid to or from said container (60) is arranged.

12. A separation system (120) according to claim 10, wherein the resilient member is a part of the container (60).

13. A separation system (120) according to any previous claim, wherein the device (61) for measuring a parameter related to the weight is a scale.

14. A separation system (120) according to claim 13, wherein said scale comprises a load cell.

15. A method for measuring the flow rate of a measurement liquid in a separation system (120) comprising a centrifugal separator (100), said measurement liquid being either a liquid feed mixture to be separated or a separated liquid phase, said method comprising the steps of
a) providing a separation system (120) according to any one of claims 1-14;
b) supplying liquid feed mixture to a feed inlet (20) of the centrifugal separator and discharging at least one separated liquid phase from a liquid outlet of the centrifugal separator (100);
c) measuring a weight increase as a function of time of a measurement liquid in said container (60) of the separation system (120), and
d) determining a flow rate of said measurement liquid based on the measured weight increase of step c).
